# EUROPÄISCHE PATENTSCHRIFT

(11) **EP 1 714 062 B1**
(45) Veröffentlichungstag und Bekanntmachung des Hinweises auf die Patenterteilung: **29.10.2008**
(21) Anmeldenummer: 05706667.2
(22) Anmeldetag: 12.01.2005
(51) Int. Cl.: F16K 17/04

(54) **DRUCKBEGRENZUNGSVENTIL MIT HYDRAULISCH DICHTENDEM DICHTRING**
PRESSURE LIMITING VALVE WITH A HYDRAULIC SEAL RING
SOUPAPE DE LIMITATION DE PRESSION A JOINT D'ETANCHEITE HYDRAULIQUE

(30) Priorität: 05.02.2004 DE 102004005747
(43) Veröffentlichungstag der Anmeldung: 25.10.2006
(73) Patentinhaber: Voss, Wolfgang, 58239 Schwerte (DE)
(72) Erfinder: Voss, Wolfgang, 58239 Schwerte (DE)
(74) Vertreter: Schulte, Jörg
(86) Internationale Anmeldenummer: PCT/DE2005/000028
(87) Internationale Veröffentlichungsnummer: WO 2005/075864

(56) Entgegenhaltungen:
- EP-A- 0 096 303
- EP-A- 0 541 894
- DE-A1- 3 909 461
- DE-U1- 8 437 091
- GB-A- 2 159 923
- US-A- 2 494 598
- US-A- 3 344 806
- US-A- 3 762 433
- US-A- 4 699 171
- US-A- 4 824 125
- US-A- 4 921 258
- US-A- 5 695 197
- US-A1- 2002 153 665

## Beschreibung

Die Erfindung betrifft ein Druckbegrenzungsventil zum Schutz von Hydraulikaggregaten gegen auftretende Überlast, insbesondere von Hydraulikstempeln im untertägigen Berg- und Tunnelbau gegen Gebirgsschlag mit einem Ventilgehäuse mit Verbraucheranschluss und Druckflüssigkeitsausgang, die durch ein gegen die Kraft der Ventilfeder verschiebliches Verschlussteil mit einer den Strömungsspalt zwischen Druckflüssigkeitsausgang und Verbraucheranschluss sichernden Dichtung voneinander getrennt und bei auftretender Überlast zum Abführen der Druckflüssigkeit miteinander verbunden sind.

Druckbegrenzungsventile werden in den verschiedensten Bereichen der Hydraulik eingesetzt und dienen vor allem dazu, Hydraulikaggregate gegen auftretende Überlast zu schützen. Dabei ist in einem Ventilgehäuse in der Regel ein Ventilkolben so angeordnet, dass er bei auftretender Überlast eine Dichtung überfährt und dann der Druckflüssigkeit die Möglichkeit gibt, so lange aus dem Druckflüssigkeitsausgang abzuströmen, bis die Überlast abgebaut ist und das Ventil wieder schließen kann. Die von dem Verschlussteil des Ventils, meist ein in einer Kolbenbohrung verschiebbarer Ventilkolben zu überfahrende Dichtung wird hohen Belastungen ausgesetzt, weil das Verschlussteil von der hochgespannten Druckflüssigkeit beaufschlagt wird und dabei trotzdem in einem Zustand bleiben muss, der eine Abdichtung des Systems insgesamt gewährleistet. Aufgrund der Druckverhältnisse wird dabei die Dichtung so verformt, dass sie in den Strömungsspalt zwischen dem verschieblichen Verschlussteil und dem feststehenden Bauteil hineinragt und von daher bei Beginn des Verschiebeweges des Verschlussteiles stark beansprucht ist. Die Standzeiten derartiger Dichtungen sind daher begrenzt. Dies gilt vor allem für das EP-A-0 096 303 entnehmbare Ventil.

Der wie eine plastische Masse verformbare und vorgespannt eingebrachte O-Ring wird beim Überfahren durch die Radialbohrungen des Ventilkolbens (Verschlussteil) so verformt, dass der Strömungsspalt durch die sich bildende Ringnase verschlossen wird. Die sich bildende Ringnase wird dann bei der Rückwärtsbewegung des Ventilkolbens wiederum so stark beansprucht, dass die genannten niedrigen Standzeiten auftreten. Bei der Ventilausführung gemäß DE-8 437 091 U1 und GB-A-2 159 923 sind die Dichtringe bei beiden Ventilkolben in die jeweilige Nut eingepasst bzw. vorgespannt eingebracht, um so einen genauen Sitz des O-Ringes zu gewährleisten. Auch hier wird der O-Ring in den Strömungsspalt hineingepresst und die dabei entstehende Ringnase führt zu den schon mehrfach erwähnten Verschleißproblemen. Auch durch eine verringerte Dicke des O-Ringes sind die beschriebenen Probleme nicht zu beheben, weil sich auch hierbei der in die Nut eintretende bzw. in der Nut wirksam werdende Hydraulikdruck in Richtung Strömungsspalt auswirkt und auch auswirken soll, weil, wie in Figur 3 von EP-A-0 096 303 angedeutet, dieser Verschluss Ziel der Verformung ist. Die DE-3 909 461 A1 zeigt unter einer Vielzahl von Darstellungen in Figur 3 ebenfalls einen solchen "verkleinerten" O-Ring. Form und Anordnung wie auch Material dieser bekannten O-Ringe führen zu der beschriebenen nachteiligen Verformung und damit zu einem frühzeitigen Ausfall solcher für die Sicherheit wichtigen Druckbegrenzungsventile.

Der Erfindung liegt daher die Aufgabe zugrunde, eine Dichtanordnung vor allem für Druckbegrenzungsventile zu schaffen, die hohe Standzeiten gewährleistet und die Dichtwirkung erhöhend ausgeführt ist.

Die Aufgabe wird gemäß der Erfindung dadurch gelöst, dass die Dichtung ein begrenzt flexibler Dichtring ist, der ohne Vorspannung und damit in Richtung auf das Verschlussteil verschiebbar in eine dafür vorgesehene Nut einsetzbar ist, wobei die Nut das Hinterströmen bis in den Nutgrund oder das teilweise Hinterströmen des Dichtringes mit Druckflüssigkeit ermöglichend ausgebildet ist.

Bei dieser den Dichtring hinterströmenden Druckflüssigkeit handelt es sich um die Systemdruckflüssigkeit, d. h. also den "Normaldruck". Diese Systemdruckflüssigkeit kann aufgrund der besonderen Ausbildung des Dichtringes und der Nut an der Wandung vorbei in den Nutgrund strömen, sodass dann der Dichtring über die Druckflüssigkeit in die Dichtflächen zusätzlich hineingedrückt wird. Da der Dichtring ohne Vorspannung eingesetzt ist, kann er auch sicher über den Systemdruck bzw. die Druckflüssigkeit aus der Nut soweit herausgedrückt werden, dass er sicher den Strömungsspalt verschließt, sodass das Gesamtsystem dicht ist. Tritt nun der Problemfall auf, d. h. wird beispielsweise der Hydraulikstempel durch Gebirgsschlag beansprucht, so wird das Verschlussteil also meist der Ventilkolben aus seinem Sitz herausgedrückt und zwar gegen die Kraft der Ventilfeder, wobei er den Dichtring überfährt, sodass dieser voll in den Einfluss der Überlastdruckflüssigkeit gerät und in die Nut hineingedrückt wird. Dadurch ist er beim Überfahren der entsprechenden Durchtrittsöffnung bzw. Radialbohrung gesichert und kann nicht durch scharfe Kanten oder die extreme Druckflüssigkeit beeinflusst werden. Ist die Radialbohrung durch den Dichtring weitgehend überfahren, kann die Druckflüssigkeit mit dem erhöhten Druck abströmen, sodass sich wieder ein annähernder Normaldruck einstellt. Nun steht der höhere Druck in der so genannten Dämpfungskammer an und gelangt über den Ringspalt zwischen Verschlussteil und feststehendem Teil in den Bereich des Dichtringes und drückt diesen in die Dichtposition, sodass die Kontaktfläche sicher auf der Dichtfläche reibt. Damit ist wiederum in diesem Bereich die optimale Dichtung gewährleistet. Das beschriebene Druckbegrenzungsventil ist somit mit einem hydraulisch dichtendem Dichtring oder besser gesagt durch die Druckflüssigkeit in die Dichtposition verschiebbaren Dichtring gesichert.

Besonders vorteilhaft ist, wenn der Dichtring einen rechteckigen, vorzugsweise quadratischen Querschnitt aufweist, weil damit eine "optimale Bewegung" des Dichtringes und eine optimale "flächige" Dichtwirkung erreicht ist

Nach einer zweckmäßigen Ausbildung der Erfindung ist vorgesehen, dass die Nut und der Dichtring so positioniert sind, dass der Dichtring auch im geschlossenen Zustand des Ventils über die Systemdruckflüssigkeit beaufschlagt ist. Dies erreicht man vor allem dadurch, dass die Systemdruckflüssigkeit im geschlossenen Zustand des Ventils durch die vorgegebenen Fließwege am Dichtring vorbei in die Nut hineinströmen kann. Dadurch beaufschlagt die Systemdruckflüssigkeit den Dichtring vorteilhaft sicher.

Nach einer weiteren zweckmäßigen Ausbildung ist vorgesehen, dass Nut und Dichtring in den Öffnungsquerschnitt der vorzugsweise als Radialbohrung ausgebildeten Verbindungsbohrung zum Strömungsspalt teilweise hineinragend angeordnet und ausgebildet sind. Mit anderen Worten kann bei einer derartigen Ausbildung die Systemdruckflüssigkeit im geschlossen Zustand des Ventils immer auf dem vorgegebenen Weg am Dichtring vorbei in die Nut einströmen und dann den Dichtring aus seinem Sitz in der Nut herausdrücken und zwar genau zielgerichtet auf die Abdichtfläche. Dabei reicht es, wenn Nut und Dichtring nur so eben über die Radialbohrung hinausragen, sodass die Systemdruckflüssigkeit gezielt in die vorgegebene Spalte eindringen kann, um den Dichtring zu beeinflussen.

Die geschilderte Dichtungsanordnung aus Nut und Dichtring kann besonders gut verwirklicht werden, wenn der Verbraucheranschluss mit einer Sackbohrung im Anschluss ausgebildet und angeordnet ist und wenn endseitig der Sackbohrung in Höhe des Strömungsspaltes Radialbohrungen vorgesehen sind. Der Weg der Systemdruckflüssigkeit und auch der Überdruckflüssigkeit ist somit vorgegeben, da sie problemlos vom und durch den Anschluss in den Bereich der Dichtungsanordnung einströmen kann, um dort wie geschildert auf den Dichtring einzuwirken und diesen zur optimalen Dichtwirkung zu bringen.

Um das Einströmen der Systemdruckflüssigkeit in den Nutgrund zu begünstigen ist es zweckmäßig, wenn die Nut im Bereich der Systemdruckflüssigkeitszuströmung eine zum Nutgrund schräg verlaufende, eine Art Trichteröffnung ergebende Wandung aufweist. Da der Dichtring quadratisch oder rechteckig ausgebildet ist, bleibt somit die erwähnte Trichteröffnung zwischen der schräg verlaufenden Wandung der Nut, durch die die Systemdruckflüssigkeit gezielt in den Bereich des Nutgrundes einströmen kann. Dabei wird mit dem Einströmen der Druckflüssigkeit die Spaltöffnung vergrößert, sodass auch wirklich die Systemdruckflüssigkeit in den Nutgrund gelangt und von dort aus hinter den Dichtring fasst, um diesen entsprechend zu beeinflussen.

Das Aufbauen des Druckes im Nutgrund, d. h. hinter dem Dichtring wird schnell wirksam, wenn im Nutgrund eine Ausbuchtung vorgesehen ist. Es bildet sich eine Art Druckblase.

Eine andere Möglichkeit der Vorgabe einer entsprechenden Trichteröffnung oder einer Einströmöffnung ist die, bei der die der schrägen Wandung gegenüberliegende Nutwand den Dichtring radial fixierend aber axial beweglich belassend ausgebildet ist. Dies bedeutet, dass der Dichtring sich zwar in Richtung Dichtungsfläche bewegen kann, nicht aber die Trichteröffnung verändernd, sodass das Einströmen der Systemdruckflüssigkeit immer gewährleistet ist. Schließlich besteht auch noch die Möglichkeit, die Trichteröffnung in gewisser Weise zwangsweise offen zu halten, wozu es denkbar ist, dass die Wandung den Dichtring beeinflussende Abstandshalter aufweist. Über diese Abstandshalter würde dann ein entsprechender Spalt offen gehalten, wobei die Abstandshalter dieses Durchströmen der Systemdruckflüssigkeit nicht behindern, natürlich aber beim Hin- und Herbewegen des Dichtringes beansprucht werden. Insofern muss diesen Abstandshaltem eine besondere Beachtung gegeben werden.

Die geschildert Ausbildung von Nut und Dichtring ist besonders gut dann anwendbar, wenn gemäß der Erfindung der den Verbraucheranschluss aufweisende Anschluss einen kolbenartigen Aufsatz aufweist, auf dem ein ein hutförmiges Kopfteil und einen Hutrand aufweisender Federteller, die Radialbohrungen m Aufsatz gegen die Kraft der Ventilfeder überfahrend verschieblich angeordnet ist, wobei der Strömungsspalt zwischen der Unterseite des Hutrandes und der Oberseite des Anschlusses bis zu den den Druckflüssigkeitsausgang darstellenden Austrittsöffnungen verlaufend ausgebildet ist. Bei dieser besonderen Ausbildung und Anordnung von Nut und Dichtring ist lediglich noch der Federteller beweglich angeordnet, während der kolbenartige Aufsatz quasi die Funktion des bisher meist üblichen Ventilkolbens übernimmt. Der Federteller bewegt sich geführt auf dem kolbenartigen Aufsatz, wobei der Dichtring und die Nut dem Federteller also dem beweglichen Teil zugeordnet sind. Schon nach kurzem Weg kann dann die Druckflüssigkeit über den geschilderten Strömungsspalt zwischen der Unterseite des Hutrandes und er Oberseite des Anschlusses abströmen, sodass sich der Überdruck schnell abbauen kann. Dementsprechend ist die Nut und der Dichtring im Bereich des unteren Hutrandes angeordnet, sodass die schon erwähnten kleinen und kurzen Wege genügen, um einen ausreichende Öffnungsquerschnitt für das abströmende Druckmedium vorzuhalten.

Der erwähnte Strömungsspalt unterhalb des Hutrandes und oberhalb des Anschlusses muss naturgemäß um 90° abgeleitet werden, wobei es vorteilhaft ist, wenn die Ecke zwischen Oberseite des Anschlusses und Aufsatz gerundet ausgeführt ist. Der hier mit hoher Geschwindigkeit abströmenden Druckflüssigkeit ist somit ein Weg vorgegeben, andererseits aber gleichzeitig sichergestellt, dass ein Verschleiß in diesem Bereich weitgehend minimiert ist.

Das sichere Ansprechen des Dichtringes beim Verschieben innerhalb der Nut wird dadurch begünstigt, dass gemäß einer Weiterbildung der Erfindung vorgesehen ist, dass die Kante zur Unterseite des Hutrandes abgeschrägt ausgebildet ist. Damit stellt sich schon nach kurzem Anheben des Federtellers ein Hohlraum auf, in den die Druckflüssigkeit einströmen kann, um dann den Anhubvorgang des Federtellers noch zusätzlich zu unterstützen. Die erwähnte Schräge hat darüber hinaus aber auch noch den Vorteil, dass beim Überfahren der Radialbohrungen die durch die Radialbohrungen abströmende Druckflüssigkeit nicht gegen eine scharfe Ecke stößt, sondern vielmehr gegen die Schräge und damit optimal abgeführt werden kann. Durch die gezielte Beeinflussung des Dichtringes auch in diesem Abschnitt wird darüber hinaus sichergestellt, dass die Druckflüssigkeit nicht in den Spalt zwischen kolbenartigem Aufsatz und Federteller einströmen kann. Aufweitere Einzelheiten hierzu wird weiter hinten noch hingewiesen werden.

Weiter vorne ist bereits erläutert worden, dass der Dichtring aus einem ohne Spannung in eine dafür vorgesehene Nut einsetzbaren Dichtring besteht, der entsprechend begrenzt flexibel sein soll. Sowohl die Montage des Dichtringes wie auch seine Wirkungsweise ist besonders optimal, wenn der Dichtring aus Kunststoff, vorzugsweise einem Polyamid besteht. Durch die Werkstoffwahl ist gleichzeitig sichergestellt, dass sich der Dichtring selbst beim Verschieben innerhalb der Nut, wenn überhaupt dann nur geringfügig verformt, sodass ein immer sicherer Dichtsitz gegeben ist.

Dieser sichere Dichtsitz wird weiter dadurch abgesichert, dass der Dichtring aus Kunststoff im Bereich der Auflagedichtfläche am kolbenartigen Aufsatz scharfe Ränder aufweist. Diese scharfen Ränder sorgen dafür, dass der Dichtring mit seiner gesamten Dichtfläche sicher aufliegt und auch im Randbereich ein "Annagen" der Dichtung gar nicht erst möglich ist.

Die Erfindung zeichnet sich insbesondere dadurch aus, dass eine Dichtanordnung für Druckbegrenzungsventile geschaffen ist, die aus einem in einer Nut angeordneten Dichtring besteht, wobei beide so ausgebildet sind, dass der Dichtring innerhalb der Nut gezielt durch einströmende Systemdruckflüssigkeit beeinflusst werden kann. Dabei wird der Dichtring aus der Nut begrenzt heraus bewegt und auf die Dichtfläche aufgedrückt, sodass die gezielte und die gewünschte Dichtwirkung immer gewährleisten ist. Beim Überfahren der Radialbohrungen wird der Dichtring dann voll durch die Systemdruckflüssigkeit oder besser gesagt durch die Überdruckflüssigkeit beaufschlagt, sodass in die Nut hineingedrückt wird und dann auch beim Überfahren der Ränder der Radialbohrungen nicht beschädigt werden kann. Erst wenn eine Überfahrung abgeschlossen ist, gelangt der Dichtring nun in den Einfluss der noch innerhalb des Systems anstehenden Systemdruckflüssigkeit, die dafür sorgt, dass er nun in den Dichtsitz gebracht wird und damit auf der Dichtfläche abdichtet, sodass auch in dieser Situation und Position eine optimale Dichtwirkung gesichert ist. Für eine besonders zweckmäßige Ausbildung der vorliegenden Erfindung ist ein Druckbegrenzungsventil vorgesehen, bei dem nur noch der entsprechend ausgebildete Federteller sich bei auftretender Überlast bewegt, während der Anschluss mit einem kolbenartigen und in den Federteller hineinragenden Aufsatz dafür sorgt, dass der Federteller sich gleichmäßig bewegt und dass die Überdruckflüssigkeit nach Überfahren der Radialbohrungen sicher abströmen kann. Der Dichtring wird bei dieser Anordnung und Erfindung geschützt, sodass hohe Standzeiten erreicht werden. Außerdem ist für eine optimale Dichtung des Druckbegrenzungsventils in allen Positionen Sorge getragen.

Weitere Einzelheiten und Vorteile der Erfindung ergeben sich aus der nachfolgenden Beschreibung der zugehörigen Zeichnungen, in denen ein bevorzugtes Ausführungsbeispiel mit den dazu notwendigen Einzelheiten und Einzelteilen dargestellt ist. Es zeigen:
- Figur 1: ein Druckbegrenzungsventil im Schnitt mit Dichtungsanordnung,
- Figur 2: eine vergrößert Darstellung des Dichtanordnungsbereiches,
- Figur 3: die Anordnung des Dichtringes im geschlossenen Zustand des Ventils,
- Figur 4: die Anordnung des Dichtringes beim Überfahren der Radialbohrungen,
- Figur 5: die Anordnung des Dichtringes nach Überfahren der Radialbohrungen und
- Figur 6: eine andere Ausbildung des Druckbegrenzungsventils im Schnitt.

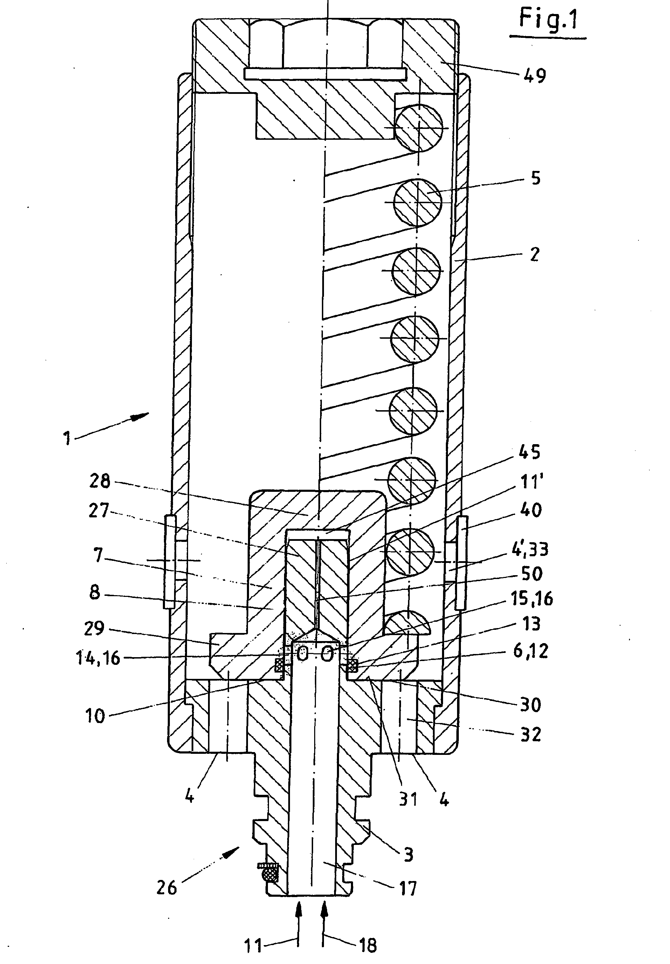

Bei dem in Figur 1 dargestellten Druckbegrenzungsventil 1 ist neben der besonderen Dichtungsanordnung auch die Ausbildung von Federteller 7 und Anschluss 26 mit kolbenartigem Aufsatz 27 von besonderer Bedeutung.

Das Druckbegrenzungsventil 1 ist im Schnitt gezeigt, wobei deutlich wird, dass das Ventilgehäuse 2 einen Verbraucheranschluss 3 und einen Druckflüssigkeitsausgang 4 aufweist, die beide im Bereich des Anschlusses 26 verwirklicht sind. Innerhalb des Ventilgehäuses 2 ist eine Ventilfeder 5 angeordnet, die sich auf den Federteller 7 abstützt, der quasi das bewegliche Verschlussteil 8 darstellt. Dieses Verschlussteil 8 sorgt mit der Dichtung 6 während des geschlossenen Zustandes des Ventils 1 für die wirksame Trennung von Verbraucheranschluss 3 und Druckflüssigkeitsausgang 4.

Die Verbindung zwischen Verbraucheranschluss 3 und Druckflüssigkeitsausgang 4 wird durch den Strömungsspalt 10 dargestellt. Erkennbar ist in Figur 1, dass durch die Dichtungsanordnung hier ein Durchfließen von Druckflüssigkeit 11 bzw. Systemdruckflüssigkeit nicht möglich ist. Der Dichtring 12 liegt ausreichend weit an dem kolbenartigen Aufsatz 27 an, sodass der Strömungsspalt 10 verschlossen ist.

Der Dichtring 12 besteht aus Polyamid oder einem ähnlichen Kunststoff und kann ohne Vorspannung in die vorgesehene Nut 13 - hier im beweglichen Federteller 7 - eingelegt werden. Der Öffnungsquerschnitt 14 der Verbindungsbohrungen 15, hier in Form von Radialbohrungen 16, ist so bemessen, dass bei auftretender Überlast ausreichende Mengen an Druckflüssigkeit abgeführt werden können und zwar durch den schon erwähnten Strömungsspalt 10 hindurch.

Tritt ein Fall von Überlast auf, so steht in der Sackbohrung 17 Überlastdruckflüssigkeit 18 an, die dafür sorgt, dass der Federteller 7 gegen die Kraft der Ventilfeder 5 verschoben wird. Dabei gelangt diese Überlastdruckflüssigkeit 18 sowohl über die Sackbohrung 17 und die Radialbohrungen 16 in den Bereich des Strömungsspaltes 10 wie auch über die Drosselbohrung 50 in den Bereich der Dämpfungskammer 45. Diese Dämpfungskammer 45 wird naturgemäß beim Hochfahren des Federtellers 7 größer, sodass beim anschließenden wieder Schließen des Druckbegrenzungsventils diese Druckflüssigkeit vor allem durch die Drosselbohrung 50 hindurch gedrückt werden muss, bevor sich der Federteller 7 und damit die Ventilfeder 5 in die Ausgangsposition bewegt.

Bei Beginn des Anhebens des Federtellers 7 überfährt der Dichtring 12 die Radialbohrungen 16, wird dann in den Nutgrund 20 gedrückt, sodass nun die Überlastdruckflüssigkeit 18 durch den Strömungsspalt 10 abströmen kann. Dieser Strömungsspalt 10 ist zwischen der Unterseite 30 des Hutrandes 29 sowie der Oberseite 31 des Anschlusses 26 gebildet, was weiter hinten noch erläutert wird und endet im Bereich der Austrittsöffnung 32. Kann nicht genügend der Druckflüssigkeit abgeführt werden, so stehen noch die Austrittsöffnungen 33 in der Wandung des Ventilgehäuses 2 zur Verfügung, sodass immer genügend Druckflüssigkeit abströmen kann. Diese Austrittsöffnungen 33 sind durch einen begrenzt flexiblen Abdichtungsring 40 abgedeckt, um das Eindringen von Schmutz zu verhindern.

Hat sich nun der der Überdruck im Verbraucher abgebaut, so steht in der Sackbohrung 17 wieder Systemdruckflüssigkeit 11 an. Damit wird das hutförmige Kopfteil 28 durch die auf den Hutrand 29 einwirkende Ventilfeder 5 wieder in die Dichtposition zurückgefahren. Die in der Dämpfungskammer 45 anstehende Druckflüssigkeit sorgt dann dafür, dass dieser Bewegungsvorgang stark gedämpft abläuft.

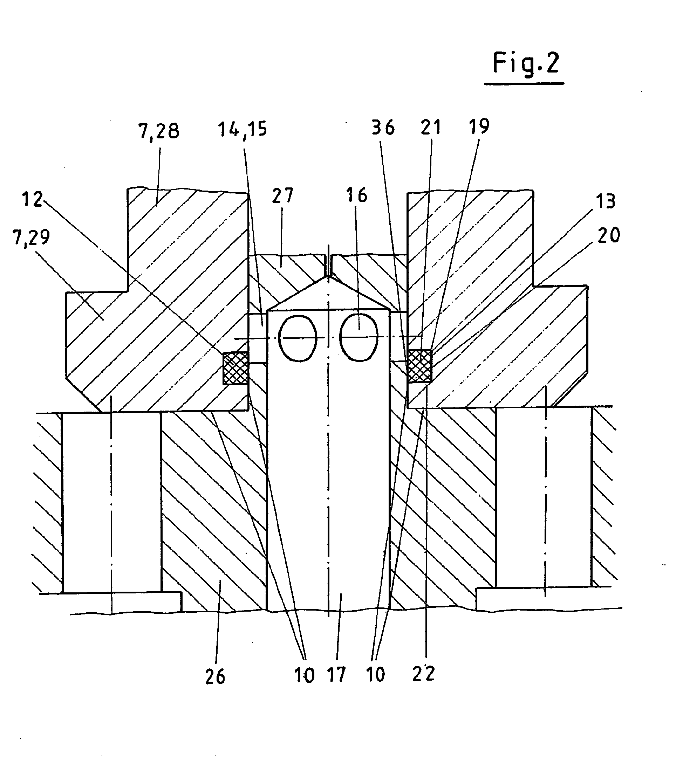

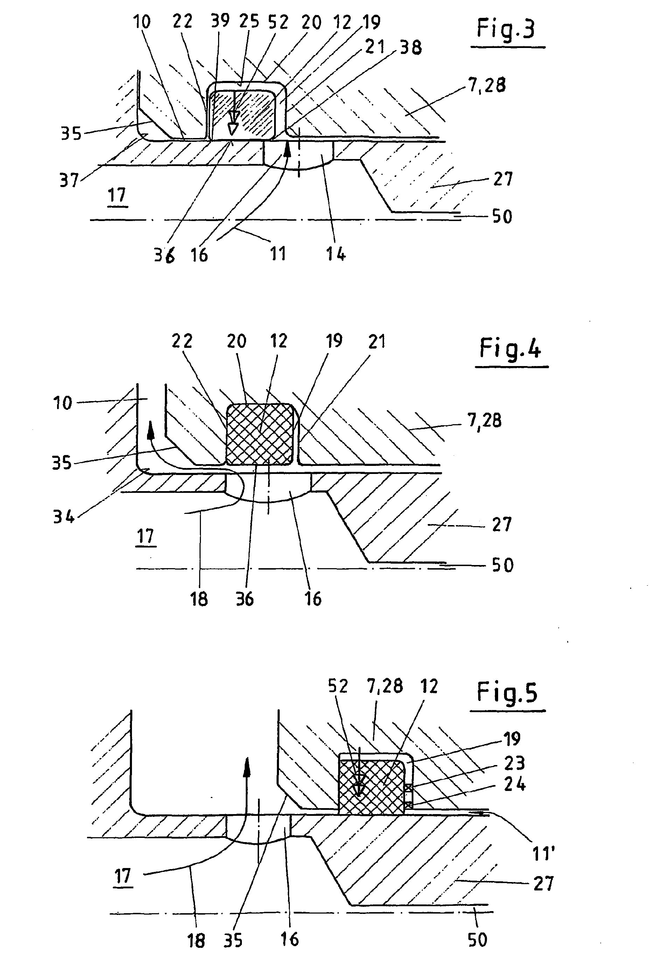

Figur 2 zeigt den Dichtbereich in vergrößerter Darstellung, wobei erkennbar ist, dass die Nut 13 etwas größer bemessen ist als der Dichtringring 12. Dadurch entsteht ein Druckspalt 19, über den die Systemdruckflüssigkeit 11 über die Radialbohrung 16 eindringen kann, um den Dichtring 12 entsprechend zu beeinflussen. Hierzu wird weiter hinten noch näheres erläutert. Die Nut 13 verfügt über eine schräge Wandung 21 im Bereich des Druckspaltes 19, um diesen vorzugeben. Die gegenüberliegende Nutwandung 22 ist in der Regel rechtwinklig zum Nutgrund 20 ausgebildet, sodass der Dichtring 12 hier sich entlang der Nutwand 22 und zielgerichtet mit seinem Rand 38, 39 auf die Dichtfläche 36 aufdrückt. Diese Dichtfläche ist in Figur 3 auch als Auflagedichtfläche 37 bezeichnet, wobei dort deutlich gemacht ist, dass diese Auflagedichtfläche 37 immer so bemessen ist, dass nicht ein Verkanten des Dichtringes 12 auftritt, sondern eine gezielte Beeinflussung in Richtung der Dichtfläche 36 bzw. der Auflagedichtfläche 37.

Die Figuren 3, 4 und 5 zeigen die verschiedenen Lagepositionen des Dichtringes 12 während des Betriebes eines derartigen Druckbegrenzungsventils 1. Figur 3 zeigt den Ausgangszustand, bei dem Systemdruck ansteht, sodass Systemdruckflüssigkeit 11 wie mit dem Pfeil angedeutet in den Druckspalt 19 einströmen kann. Dieser Druckspalt 19 und auch der im Bereich des Nutgrundes 20 zu sehende Spalt ist größer als in Wirklichkeit gezeichnet, um zu verdeutlichen, welcher Bewegungsabschnitt hier stattfindet. Durch die Systemdruckflüssigkeit 11 wird nämlich der Dichtring 12 in Richtung gegenüberliegender Nutwand 22 gedrückt und dann durch das Einströmen der Systemdruckflüssigkeit 11 in den Bereich des Nutgrundes 20 auch in Richtung auf die Auflagedichtfläche 37. Mit den Pfeilen ist die Druckrichtung 52 wieder gegeben.

Der in den Figuren 3 bis 5 gezeigte Dichtring 12 weist im Bereich der Dichtfläche 36 scharf geschnittene Ränder 38, 39 auf. Hierdurch wird beim Auftreffen auf die Auflagedichtfläche 37 sichergestellt, dass eine vollständige Abdichtung gegeben ist.

Erkennbar ist in Figur 3 sowie 4 und 5 weiter, dass die Ecke 34 zwischen der Oberseite 31 und dem kolbenartigen Aufsatz 27 abgerundet ausgebildet ist, um das Abströmen der Überlastdruckflüssigkeit 18 wie in Figur 4 gezeigt wird zu erleichtern. Außerdem ist die Kante 35 an der Unterseite 30 des Hütrandes 29 abgeschrägt, um auch hierdurch der Überlastdruckflüssigkeit 18 das Abströmen zu erleichtern, gleichzeitig aber zu vermeiden, dass bei der Position nach Figur 5 Druckflüssigkeit nicht oder nur ungenügend abströmt oder aber versucht in Richtung Spalt zum Dichtring 12 zu strömen. Vielmehr wird die Überlastdruckflüssigkeit 18 von vornherein wie in den Figuren 4 und 5 gezeigt gezielt geführt.

Figur 4 insbesondere kann entnommen werden, dass die Wandung 21 schräg verlaufend ausgebildet ist, sodass sich der schon erwähnte Druckspalt 19 ergibt. Um diesen offen zu halten ist nach Figur 5 die Anordnung von Abstandshaltern 23, 24 vorgesehen.

Bei der aus Figur 5 ersichtlichen Position hat der Dichtring 12 die Radialbohrung 16 längst überfahren und gelangt nun unter den Einfluss der Dämpfungskammer 45 bzw. der darin anstehenden Druckflüssigkeit 11'. Über den in Figur 5 dargestellt Spalt; der natürlich auch wieder übertrieben dargestellt ist, gelangt diese Druckflüssigkeit 11' dann bis zum Dichtring 12, wo sie über den Druckspalt 19 in den Bereich des Nutgrundes 20 gelangt und dann die in Figur 5 angedeutete Dichtwirkung erbringt.

Wird dann das Ventil wieder geschlossen und damit der Federteller 7 in die in Figur 3 gezeigte Position zurückgedrückt, überfährt der Dichtring 12 die Radialbohrung 16 wieder in entspannten Zustand, sobald er den Bereich der Radialbohrung 16 erreicht.

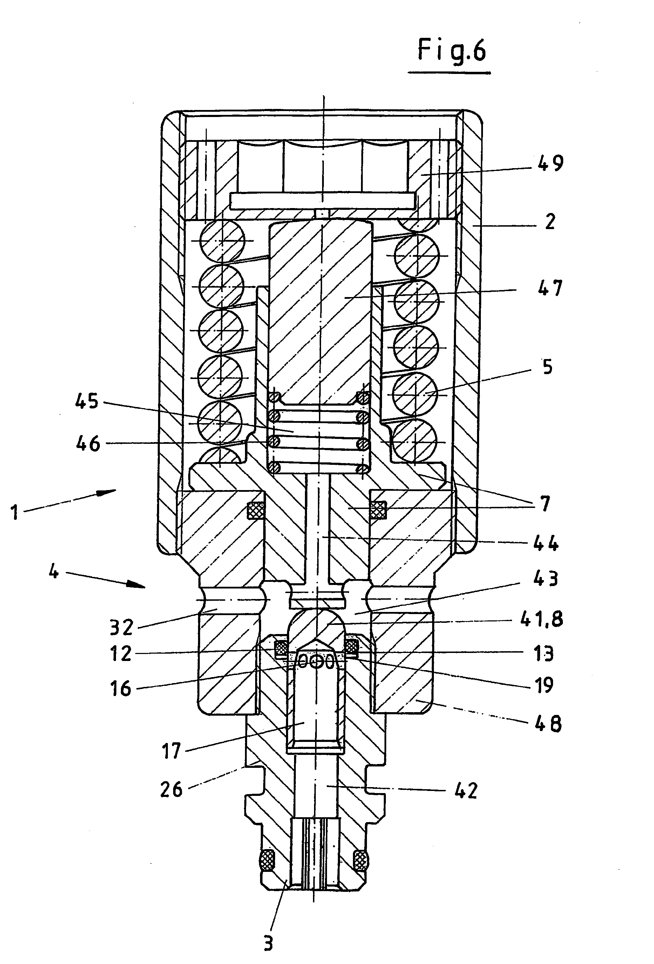

Figur 6 schließlich zeigt eine andere Ausführung eines Druckbegrenzungsventils1, wobei hier ein Ventilkolben 41 zum Einsatz kommt, der in der Kolbenbohrung 42 verschieblich angeordnet ist. Er verfügt ebenfalls über eine Sackbohrung 17 und endseitige Radialbohrungen 16, die beim Überfahren des Dichtringes 12 dafür sorgen, die Überlastdruckflüssigkeit 18 abgeführt werden kann und zwar über die Abströmkammer 43 und die Austrittsöffnungen 32. Gleichzeitig wird hier die Druckflüssigkeit über die Tellerbohrung 44 in die Dämpfungskammer 45 geleitet, um beim wieder Schließen des Druckbegrenzungsventils 1 eine Dämpfwirkung zu erbringen. Die Dämpfungsfeder 46 unterstützt die Dämpfwirkung. Sie drückt gegen den Dämpfungsstößel 47. Mit 48 ist ein Zwischenteil bezeichnet, in dem die Austrittsöffnungen 32 und die Abströmkammer 43 ausgebildet sind und die den eigentlichen Anschluss 26 aufnimmt. Am oberen Ende des Ventilgehäuses 2 ist wie auch bei der Ausbildung nach Figur 1 eine Federstellschraube 49 vorgesehen, mit der die Ventilfeder 5 gezielt gespannt werden kann.

Alle genannten Merkmale, auch die den Zeichnungen allein zu entnehmenden, werden allein und in Kombination als efindungswesentlich angesehen.

## Patentansprüche

1. Druckbegrenzungsventil zum Schutz von Hydraulikaggregaten gegen auftretende Überlast, insbesondere von Hydraulikstempeln im untertägigen Berg- und Tunnelbau gegen Gebirgsschlag mit einem Ventilgehäuse (2) mit Verbraucheranschluss (3) und Druckflüssigkeitsausgang (4), die durch ein gegen die Kraft der Ventilfeder (5) verschiebliches Verschlussteil (8) mit einer den Strömungsspalt (10) zwischen Druckflüssigkeitsausgang (4) und Verbraucheranschluss (3) sichernden Dichtung (6) voneinander getrennt und bei auftretender Überlast zum Abführen der Druckflüssigkeit miteinander verbunden sind,
**dadurch gekennzeichnet,**
**dass** die Dichtung (6) ein begrenzt flexibler Dichtring (12) ist, der ohne Vorspannung und damit in Richtung auf das Verschlussteil (8) verschiebbar in eine dafür vorgesehene Nut (13) einsetzbar ist, wobei die Nut (13) das Hinterströmen bis in den Nutgrund (20) oder das teilweise Hinterströmen des Dichtringes (12) mit Druckflüssigkeit (11) ermöglichend ausgebildet ist.

2. Druckbegrenzungsventil nach Anspruch 1,
**dadurchgekennzeichnet,**
dass der Dichtring (12) einen rechteckigen, vorzugsweise quadratischen Querschnitt aufweist.

3. Druckbegrenzungsventil nach Anspruch 1,
**dadurch gekennzeichnet,**
**dass** die Nut (13) und der Dichtring (12) so positioniert sind, dass der Dichtring (12) auch im geschlossenen Zustand des Ventils (1) über die Systemdruckflüssig-' keit (11) beaufschlagt ist.

4. Druckbegrenzungsventil nach einem der vorhergehenden Ansprüche,
**dadurch gekennzeichnet,**
**dass** Nut (13) und Dichtring (12) in den Öffnungsquerschnitt (14) der vorzugsweise als Radialbohrung (16) ausgebildeten Verbindungsbohrung (15) zum Strömungsspalt (10) teilweise hineinragend angeordnet und ausgebildet sind.

5. Druckbegrenzungsventil nach einem der vorhergehenden Ansprüche,
**dadurch gekennzeichnet,**
**dass** der Verbraucheranschluss (3) mit einer Sackbohrung (17) im Anschluss (26) ausgebildet und angeordnet ist und dass endseitig der Sackbohrung (17) in Höhe des Strömungsspaltes (10) Radialbohrungen (16) vorgesehen sind.

6. Druckbegrenzungsventil nach einem der vorhergehenden Ansprüche,
**dadurch gekennzeichnet,**
**dass** die Nut (13) im Bereich der Systemdruckflüssigkeitszuströmung (11) eine zum Nutgrund (20) schräg verlaufende, eine Art Trichteröffnung ergebende Wandung (21) aufweist.

7. Druckbegrenzungsventil nach einem der vorhergehenden Ansprüche,
**dadurch gekennzeichnet,**
**dass** im Nutgrund (20) eine Ausbuchtung (25) vorgesehen ist.

8. Druckbegrenzungsventil nach einem der vorhergehenden Ansprüche,
**dadurch gekennzeichnet,**
**dass** die der schrägen Wandung (21) gegenüberliegende Nutwand (22) den Dichtring (12) radial fixierend aber axial beweglich belassend ausgebildet ist.

9. Druckbegrenzungsventil nach einem der vorhergehenden Ansprüche,
**dadurch gekennzeichnet,**
**dass** die Wandung (21) den Dichtring (12) beeinflussende Abstandshalter (23, 24) aufweist.

10. Druckbegrenzungsventil nach Anspruch 4,
**dadurch gekennzeichnet,**
**dass** der den Verbraucheranschluss (3) aufweisende Anschluss (26) einen kolbenartigen Aufsatz (27) aufweist, auf dem ein ein hutförmiges Kopfteil (28) und einen-Hutrand (29) aufweisender Federteller (7), die Radialbohrungen (16) im Aufsatz (27) gegen die Kraft der Ventilfeder (5) überfahrend verschieblich angeordnet ist, wobei der Strömungsspalt (10) zwischen der Unterseite (30) des Hutrandes (29) und der Oberseite (31) des Anschlussnippels (26) bis zu den den Druckflüssigkeitsausgang (4) darstellenden Austrittsöffnungen (32, 33) verlaufend ausgebildet ist.

11. Druckbegrenzungsventil nach einem der vorhergehenden Ansprüche,
**dadurch gekennzeichnet,**
**dass** die Ecke (34) zwischen Oberseite (31) des Anschlussnippels (26) und Aufsatz (27) gerundet ausgeführt ist.

12. Druckbegrenzungsventil nach einem der vorhergehenden Ansprüche,
**dadurch gekennzeichnet,**
**dass** die Kante (25) zur Unterseite (30) des Hutrandes (29) abgeschrägt ausgebildet ist.

13. Druckbegrenzungsventil nach einem der vorhergehenden Ansprüche,
**dadurch gekennzeichnet,**
**dass** der Dichtring (12) aus Kunststoff, vorzugsweise einem Polyamid besteht.

14. Druckbegrenzungsventil nach einem der vorhergehenden Ansprüche,
**dadurch gekennzeichnet,**
**dass** der Dichtring (12) aus Kunststoff im Bereich der Auflagedichtfläche (37) am kolbenartigen Aufsatz (27) scharfe Ränder (38, 39) aufweist.

## Claims

1. A pressure limiting valve for the protection of hydraulic aggregates against occurring overload, particularly hydraulic stamps in underground mining and tunnel construction against rock burst, with a valve housing (2) with consumer connection (3) and pressure liquid outlet (4) which are separated from one another by a closure component (8) that is slidable against the force of the valve spring (5), with a seal (6) safeguarding the flow gap (10) between pressure liquid outlet (4) and consumer connection (3) and, upon occurring overload, are joined to one another for withdrawing the liquid,
**characterised in that**
the seal (6) is a limited flexible seal ring (12) that can be deployed without initial tension and, subsequently, is slidable in the direction towards the closure component (8) in a groove (13) envisaged for this purpose, wherein the groove (13) is formed in such a way that it allows the rear flow all the way into the groove bottom (20) or the partial rear flow of the seal ring (12) with pressure liquid (11).

2. The pressure limiting valve according to Claim 1,
**characterised in that**
the seal ring (12) has a rectangular but preferably a square cross-section.

3. The pressure limiting valve according to Claim 1,
**characterised in that**
the groove (13) and the seal ring (12) are positioned in such a way that the seal ring (12) is also surface-impacted in the closed state of the valve (1) by way of the system pressure liquid (11).

4. The pressure limiting valve according to any one of the preceding Claims,
**characterised in that**
the groove (13) and seal ring (12) are arranged and formed partially extending into the opening cross-section (14) of the connecting bore (15) to the flow gap (10) wherein said bore is preferably formed as a radial bore (16).

5. The pressure limiting valve according to any one of the preceding Claims,
**characterised in that**
the consumer connection (3) is formed and arranged with a blind hole (17) in the connection (26) and that radial bores (16) are envisaged on the end side of the blind hole (17) on the level of the flow gap (10).

6. The pressure limiting valve according to any one of the preceding Claims,
**characterised in that**
the groove (13) in the area of the system pressure liquid inflow (11) has a wall (21) running slanted to the groove bottom (20), resulting in a type of funnel opening.

7. The pressure limiting valve according to any one of the preceding Claims,
**characterised in that**
a recess (25) is envisaged in the groove bottom (20).

8. The pressure limiting valve according to any one of the preceding Claims,
**characterised in that**
the groove wall (22) opposite the slanted wall (21) radially fixates the seal ring (12) but, however, is formed while retaining axial movement.

9. The pressure limiting valve according to any one of the preceding Claims,
**characterised in that**
the wall (21) has spacers (23, 24) having an influence on the seal ring (12).

10. The pressure limiting valve according to Claim 4,
**characterised in that**
the connection (26) having the consumer connection (3) has a piston-type fixture (27), on which a spring plate having a hat-shaped head component (28) and a hat rim (29), crossing over the radial bores (16) in the fixture (27) against the force of the valve spring (5), is arranged in a slidable manner wherein the flow gap (10) between the lower side (30) of the hat rim (29) and the upper side (31) of the connection nipple (26) is formed running up to the outlet openings (32, 33) representing the pressure liquid outlet (4).

11. The pressure limiting valve according to any one of the preceding Claims,
**characterised in that**
the corner (34) between upper side (31) of the connection nipple (26) and fixture (27) is executed in a rounded manner.

12. The pressure limiting valve according to any one of the preceding Claims,
**characterised in that**
the edge (25) towards the lower side (30) of the hat rim (29) has a bevelled formation.

13. The pressure limiting valve according to any one of the preceding Claims,
**characterised in that**
the seal ring (12) consists of a synthetic material, preferably a polyamide.

14. The pressure limiting valve according to any one of the preceding Claims,
**characterised in that**
the seal ring (12) consisting of synthetic material has sharp rims (38, 39) in the area of the surface-to-surface sealing area (37) on the piston-type fixture (27).

## Revendications

1. Soupape de limitation de pression pour la protection d'agrégats hydrauliques contre des surcharges qui se produisent, en particulier pour la protection d'étançons hydrauliques contre les coups de charge dans l'exploitation minière ou la construction de tunnels souterrains, avec une cage de soupape (2) avec raccord de consommateur (3) et sortie de fluide hydraulique (4) qui sont séparés par une pièce de fermeture (8) pouvant être déplacée contre la force du ressort de soupape (5), pièce de fermeture (8) qui comprend un joint (6) protégeant l'écartement d'écoulement (10) entre la sortie de fluide hydraulique (4) et le raccord de consommateur (3), raccord de consommateur (3) et sortie de fluide hydraulique (4) qui sont reliés pour l'évacuation du fluide hydraulique en cas de surcharge,
**caractérisée en ce que**
le joint (6) est une bague d'étanchéité (12) flexible dans une certaine limite qui peut être insérée sans précontrainte et ainsi de manière à pouvoir se déplacer vers la pièce de fermeture (8) dans une rainure (13) prévue à cet effet, étant donné que la rainure (13) est formée de manière à permettre à un fluide hydraulique (11) de s'écouler par derrière jusqu'à la base de la rainure (20) ou de s'écouler en partie derrière la bague d'étanchéité (12).

2. Soupape de limitation de pression selon la revendication 1,
**caractérisée en ce que**
la bague d'étanchéité (12) présente une section transversale rectangulaire, de préférence carrée.

3. Soupape de limitation de pression selon la revendication 1,
**caractérisée en ce que**
la rainure (3) et la bague d'étanchéité (12) sont positionnées de manière à ce que la bague d'étanchéité (12) soit alimentée en fluide hydraulique du système (11) même quand la soupape (1) est fermée.

4. Soupape de limitation de pression selon l'une quelconque des revendications précédentes,
**caractérisée en ce que**
la rainure (13) et la bague d'étanchéité (12) sont disposées et formées de manière à faire saillie en partie dans la section d'ouverture (14) de l'alésage de raccordement (15), formé de préférence comme alésage radial (16), vers l'écartement d'écoulement (10).

5. Soupape de limitation de pression selon l'une quelconque des revendications précédentes,
**caractérisée en ce que**
le raccord de consommateur (3) est formé et disposé avec un alésage borgne (17) dans le raccord (26) et **en ce que** des alésages radiaux (16) sont prévus à l'extrémité de l'alésage borgne (17) au niveau de l'écartement d'écoulement (10).

6. Soupape de limitation de pression selon l'une quelconque des revendications précédentes,
**caractérisée en ce que**
la rainure (13) présente dans la zone d'afflux de fluide hydraulique (11) une paroi (21) inclinée vers la base de la rainure (20) de manière à former une sorte d'ouverture en entonnoir.

7. Soupape de limitation de pression selon l'une quelconque des revendications précédentes,
**caractérisée en ce que**
une courbure (25) est prévue dans la base de la rainure (20).

8. Soupape de limitation de pression selon l'une quelconque des revendications précédentes,
**caractérisée en ce que**
la paroi de la rainure (22) opposée à la paroi (21) inclinée est formée de manière à fixer la bague d'étanchéité (12) radialement tout en la laissant mobile axialement.

9. Soupape de limitation de pression selon l'une quelconque des revendications précédentes,
**caractérisée en ce que**
la paroi (21) présente des pièces d'écartement (23, 24) qui ont une influence sur la bague d'étanchéité (12).

10. Soupape de limitation de pression selon la revendication 4,
**caractérisée en ce que**
le raccord (26) présentant le raccord de consommateur (3) présente une coupole (27) en forme de piston, sur laquelle est disposée une cuvette de ressort (7) présentant une pièce de tête (28) en forme de chapeau et un bord de chapeau (29) de manière à pouvoir se déplacer et dépasser les alésages radiaux (16) dans la coupole (27) contre la force du ressort de soupape (5), étant donné que l'écartement d'écoulement (10) entre la face inférieure (30) du bord de chapeau (29) et la face supérieure (31) du nipple de raccord (26) est formé de manière à s'étendre jusqu'aux orifices de sortie (32, 33) représentant la sortie de fluide hydraulique (4).

11. Soupape de limitation de pression selon l'une quelconque des revendications précédentes,
**caractérisée en ce que**
le coin (34) entre la face supérieure (31) du nipple de raccordement (26) et la coupole (27) est réalisé de manière arrondie.

12. Soupape de limitation de pression selon l'une quelconque des revendications précédentes,
**caractérisée en ce que**
l'arête (25) vers la face inférieure (30) du bord de chapeau (29) est formée de manière inclinée.

13. Soupape de limitation de pression selon l'une quelconque des revendications précédentes,
**caractérisée en ce que**
la bague d'étanchéité (12) est fabriquée en matière plastique, de préférence en polyamide.

14. Soupape de limitation de pression selon l'une quelconque des revendications précédentes,
**caractérisée en ce que**
la bague d'étanchéité (12) en matière plastique présente des bords vifs (38, 39) dans la zone de la surface d'étanchéité d'appui (37) sur la coupole (27) agissant comme piston.
